# EUROPEAN PATENT APPLICATION

(11) **EP 0 992 634 A2**
(43) Date of publication of application: **12.04.2000**
(21) Application number: 99500180.7
(22) Date of filing: 08.10.1999
(51) Int. Cl.: E03F 1/00

(54) **A system which uses and treats surface waters, respecting gravity and taking account of space, time, oxygen and transportation**

(30) Priority: 08.10.1998 ES 9802101
(71) Applicant: Placido Abejon Vicario, 28022 Madrid (ES)
(72) Inventor: The designation of the inventor has not yet been filed

(57) **Abstract**

*VALDEPURADOR* is the system which uses and treats surface waters, respecting gravity and taking account of space, time, oxygen and transportation, consisting of a pipe (1) coupled at the top to the guttering outlet, with spaces to couple tanks which are filled by overflow to be used subsequently to clean toilets, with discharge of the surplus water in the space (3) and thence to the sewage system. On the other hand, the pipe (2) is of a given height and funnel shaped at the top, with a sloping inlet on one side to connect to the toilets. The space (3) terminates in a pipe (4) which is perforated at the top, continuing in a sealed section, and ending in a bevel with a gate closed by gravity and raised to open, to discharge the waste into containers which collect the filtered water and where a chute takes the water to the outlet, connected to the sewage system.

## Description

### SUBJECT OF THE INVENTION

These specifications refer to a new application for a patent which simplifies, classifies and develops applications nos. P9501241, P9502455, P9601321 and P97101321, summarised here in two parts.
1.- The drainage installations in buildings to eliminate the feedback of unpleasant odours from waste water are simplified and classified.
2.- To create a space under buildings to eliminate the putrefaction process using filtration by decanting, depositing the waste in the water in tanks to prevent continuity and feedback of unpleasant odours from the source until discharge into rivers and the like.

Some of these results were presented for the 1997/98 Industry Awards for Environmental Protection, Spanish Section, and for the selection of the First World Congress on Urban Health and Environment, Madrid, Spain, July 6-10 1998.

### FIELD OF APPLICATION

This invention is applicable in all buildings along the sewage network.

### PRIOR ART

The inventor is unaware of systems or designs which make use of space, time, oxygen and transport to use and treat water. The present system is considered to be similar to the natural cycle as such.

### DESCRIPTION OF THE INVENTION

To eliminate the unpleasant odours caused by waste water from its source until discharged, the inventor's research has been addressed to the simplification and classification of the discharge systems for waste water in buildings, locating the services inside the wall and directly connected to the sump of the downpipe located on the outside of that wall, with particular shapes and open spaces for free, independent ventilation. The system continues in the lower part of the building to create a space to collect surplus rainwater falling on the roof and channelled to the sewage system.

On the other hand, the sump for collection of waste water from toilets with a perforated area at a given height around its whole perimeter is followed by a sealed section ending in a bevel with a gate closed by the force of gravity and opened by lifting to discharge the waste into containers.

The filtered water flows to a trough in the upper sealed section which directs it to the sewage system.

The same applies to the sump for collection of waste water from washbasins, sinks, baths and washing machines.

### DESCRIPTION OF THE DRAWINGS

For a better understanding, the Specifications are accompanied by a single page with one drawing and a photograph of the prototype manufactured by the inventor, given by way of illustration and without limitation.

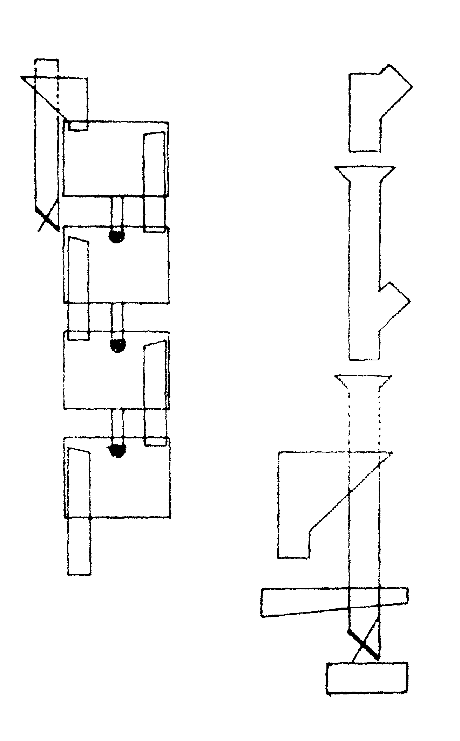

The figure shows a front elevation of the new installation for water drainage in buildings to prevent continuity and the feedback of unpleasant odours, which is the subject of this invention.

### PREFERENTIAL EMBODIMENTS OF THE INVENTION

The figure shows how surface water can be used and treated, respecting gravity, and taking account of space, time, oxygen and transportation. The top of the pipe (1) is connected to the discharge from the guttering, with spaces to couple tanks filled by overflow, for use subsequently to clean toilets and the like and with discharge of the excess into the space (3) from where it is directed to the sewage system. On the other hand, the sump is formed by a pipe (2) of a given height, funnel-shaped at the top and with inclined inlets on one side for connection to toilets and the like, and with open spaces at the joints for free, independent ventilation, ending up inside the space (3) in a pipe (4) whose top is perforated and which then continues in a sealed section, ending in a bevel with a gate closed under gravity and opened by elevation, for discharge into containers to collect the filtered water. A chute is required at the intermediate point to carry the water to the outlet from the space (3).

## Claims

1. A system to use and treat surface waters, respecting gravity and taking account of space, time, oxygen and transportation, wherein the rainwater falling on to the roof is used, along the pipe (1) connected to the guttering, with tanks filled by the overflow to be used subsequently to clean toilets.

2. A system to use and treat surface waters, respecting gravity and taking account of space, time, oxygen and transportation, as set forth in claim 1, wherein account is taken of space and time to eliminate the feedback of unpleasant odours occurring in bathrooms with the pipe (2) which is funnel-shaped at the top, of a given height and with inlets on one side to connect the toilets.

3. A system to use and treat surface waters, respecting gravity and taking account of space, time, oxygen and transportation, as set forth in previous claims, wherein gaps are left in the sump joints for free, independent ventilation.

4. A system to use and treat surface waters, respecting gravity and taking account of space, time, oxygen and transportation, as set forth in previous claims, wherein a space (3) is created in the base of the buildings to collect the selected filtered water, with the waste being deposited separately in containers.

5. A system to use and treat surface waters, respecting gravity and taking account of space, time, oxygen and transportation, as set forth in previous claims, wherein the waste water is filtered by the pipe (4) which is funnel-shaped at the top, then perforated, and then with a sealed section ending in a bevel with a gate closed under the force of gravity and opened by raising, for the discharge of the waste into containers.

6. Valdepuradora is a system to use and treat surface waters, respecting gravity and taking account of space, time, oxygen and transportation, as set forth in previous claims.
